# EUROPÄISCHE PATENTANMELDUNG

(11) **EP 1 857 720 A2**
(43) Veröffentlichungstag der Anmeldung: **21.11.2007**
(21) Anmeldenummer: 07102722.1
(22) Anmeldetag: 20.02.2007
(51) Int. Cl.: F16K 31/08

(54) **Magnetventil**

(30) Priorität: 15.05.2006 DE 102006022561
(71) Anmelder: Nass Magnet GmbH, 30179 Hannover (DE)
(72) Erfinder: Ruether, Robert, 30966 Hemmingen (DE); Heinemann, Arndt, 31535 Neustadt (DE); Barth, Rudolf M., 30851 Langenhagen (DE); Oßenbrügge, Jan-Peter, 31303 Burgdorf (DE)
(74) Vertreter: Tetzner, Michael

(57) **Zusammenfassung**

Die Erfindung betrifft ein Magnetventil mit einem Magnetkopf (1), der eine Spule (2), einen Magnetkern (3) und einen Anker (4) aufweist, sowie einem Ventilkörper (20) mit wenigstens einem Einlass (21), einem Auslass (22) und einem dazwischen angeordneten Ventilsitz (23), wobei eine mit dem Ventilsitz zusammenwirkende Dichtung (24) vorgesehen ist, die durch den Anker (4) zwischen einer Schließstellung und einer Öffnungsstellung verschiebbar ist, wobei der Anker (4) in der einen Stellung mittels eines Federelements (25) und in der anderen Stellung mittels eines Permanentmagneten (7) gehalten wird und die Verschiebung des Ankers (4) durch Bestromung der Spule (2) erfolgt. Der Permanentmagnet ist dabei in einer Aussparung des Magnetkerns oder Ankers vorgesehen.

## Beschreibung

Die Erfindung betrifft ein Magnetventil mit einem Magnetkopf, der eine Spule, einen Magnetkern und einen Anker aufweist sowie einem Ventilkörper mit wenigstens einem Einlass, einem Auslass und einem dazwischen angeordneten Ventilsitz. Weiterhin ist eine mit dem Ventilsitz zusammenwirkende Dichtung vorgesehen, die durch den Anker zwischen einer Schließstellung und einer Öffnungsstellung verschiebbar ist, wobei der Anker in der einen Stellung mittels eines Federelements und in der anderen Stellung mittels eines Permanentmagneten gehalten wird und die Verschiebung des Ankers durch Bestromung der Spule erfolgt.

Aus der DE-B-39 39 537 ist ein derartiges Magnetventil bekannt. Dabei ist an der dem Anker zugewandten Stirnseite des Kerns eine durch ihre Magnetkraft selbsthaltende Permanentmagnetscheibe festgelegt. Weiterhin haftet an der dem Anker zugewandten Seite der Permanentmagnetscheibe eine als Kernscheibe ausgebildete Anschlagdämpfung. Durch die scheibenartige Anschlagdämpfung wird eine mechanische Abschirmung der stoßempfindlichen Permanentmagnetscheibe bewirkt.

Der Erfindung liegt nun die Aufgabe zugrunde, dass oben beschriebene Magnetventil dahingehend weiterzuentwickeln, dass auf die zusätzliche Anschlagdämpfung verzichtet werden kann.

Erfindungsgemäß wird diese Aufgabe durch die Merkmale des Anspruches 1 gelöst.

Das erfindungsgemäße Magnetventil besteht im Wesentlichen aus einem Magnetkopf, der eine Spule, einen Magnetkern und einen Anker aufweist, sowie einem Ventilkörper mit wenigstens einem Einlass, einem Auslass und einem dazwischen angeordneten Ventilsitz, wobei eine mit dem Ventilsitz zusammenwirkende Dichtung vorgesehen ist, die durch den Anker zwischen einer Schließstellung und einer Öffnungsstellung verschiebbar ist, wobei der Anker in der einen Stellung mittels eines Federelements und in der anderen Stellung mittels eines Permanentmagneten gehalten wird und die Verschiebung des Ankers durch Bestromung der Spule erfolgt. Der Permanentmagnet ist dabei in einer Aussparung des Magnetkerns oder Ankers vorgesehen.

Gemäß einer Ausgestaltung ist die Aussparung als ringförmige Umfangsnut in der Umfangswand des Magnetkerns/Ankers ausgebildet. Gemäß einer weiteren Ausbildung weist die dem Anker zugewandte Stirnfläche des Magnetkerns eine Kernpolfläche und die dem Magnetkern zugewandte Stirnfläche des Ankers eine Ankerpolfläche auf, wobei der Permanentmagnet entweder mit axialem Abstand zur Kernpolfläche am Magnetkern oder mit axialem Abstand zur Ankerpolfläche am Anker gehaltert ist.

Der Permanentmagnet kann ringscheibenförmig ausgebildet sein, wobei insbesondere eine Ringscheibe in Betracht kommt, die um einen zapfenförmigen Teil des Magnetkerns /Ankers angeordnet ist.

In einer weiteren Ausgestaltung ist vorgesehen, dass der Permanentmagnet aus einem Kunststoff mit eingelagerten permanentmagnetischen Elementen besteht. Dadurch kann der Permanentmagnet beispielsweise durch ein Kunststoffspritzgussverfahren in die Aussparung des Magnetkerns eingebracht werden.

Weitere Vorteile und Ausgestaltungen der Erfindung werden im folgenden anhand der Beschreibung einiger Ausführungsbeispiele und der Zeichnung näher erläutert.

In der Zeichnung zeigen
- Fig. 1: eine Schnittdarstellung eines erfindungsgemäßen Magnetventils gemäß einem ersten Ausführungsbeispiel,
- Fig. 2: eine vergrößerte Schnittdarstellung des Kerns des Magnetventils gemäß Fig. 1,
- Fig. 3: eine Schnittdarstellung des Permanentmagneten längs der Linie A-A der Fig. 2 gemäß einem ersten Ausführungsbeispiel,
- Fig. 4: eine Schnittdarstellung des Permanentmagneten längs der Linie A-A der Fig. 2 gemäß einem zweiten Ausführungsbeispiel,
- Fig. 5: eine Schnittdarstellung des Kerns gemäß einer zweiten Variante und
- Fig. 6: eine Schnittdarstellung eines Magnetventils gemäß einem zweiten Ausführungsbeispiel.

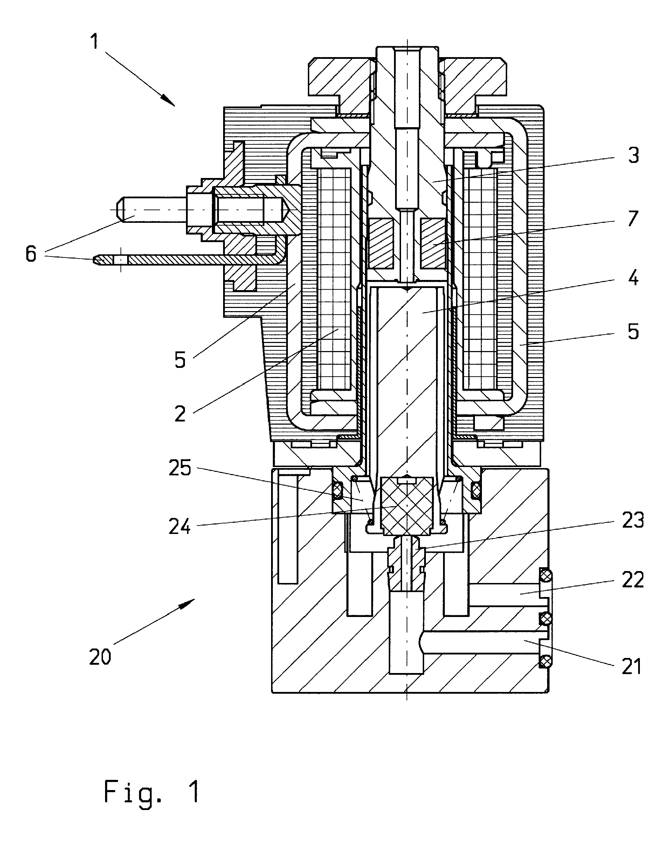

Das im Fig. 1 dargestellte Magnetventil besteht im Wesentlichen aus einem Magnetkopf 1, der eine Spule 2, einen Magnetkern 3 und einen Anker 4 aufweist, sowie einem Ventilkörper 20 mit wenigstens einem Einlass 21, einem Auslass 22 und einem dazwischen angeordneten Ventilsitz 23, wobei eine mit dem Ventilsitz zusammenwirkenden Dichtung 24 vorgesehen ist.

Die Dichtung 24 ist an dem dem Kern 3 gegenüberliegenden Ende des Ankers 4 gehaltert und durch den Anker zwischen einer Schließstellung gemäß Fig. 1 und einer nichtgezeigten Öffnungsstellung verschiebbar. Beim darstellten Ausführungsbeispiel wird der Anker in der Schließstellung mittels eines Federelements 25 gehalten.

Das Magnetventil kann insbesondere als 2/2-Wegeventil oder als 3/2-Wegeventil ausgebildet sein.

Der Magnetkopf weist ferner einen zweiteiligen Jochbügel 5 sowie Anschlüsse 6 zur Bestromung der Spule auf.

In einer Aussparung 3a des Kerns 3 ist ferner ein Permanentmagnet 7 vorgesehen, der den Anker 4 in der Schließstellung des Ventils durch Magnetkraft am Kern festhält, ohne dass eine fortwährende Bestromung der Spule 2 erforderlich ist. Die Kraft des Federelements 25 und die Kraft des Permanentmagneten 7 sind dabei so aufeinander abgestellt, dass in der Schließstellung des Ventils die Kraft des Federelements und in der Öffnungsstellung die Kraft des Permanentmagneten überwiegt. Auf diese Weise muss lediglich für den Schaltvorgang die Spule kurzzeitig in der einen bzw. anderen Richtung bestromt werden.

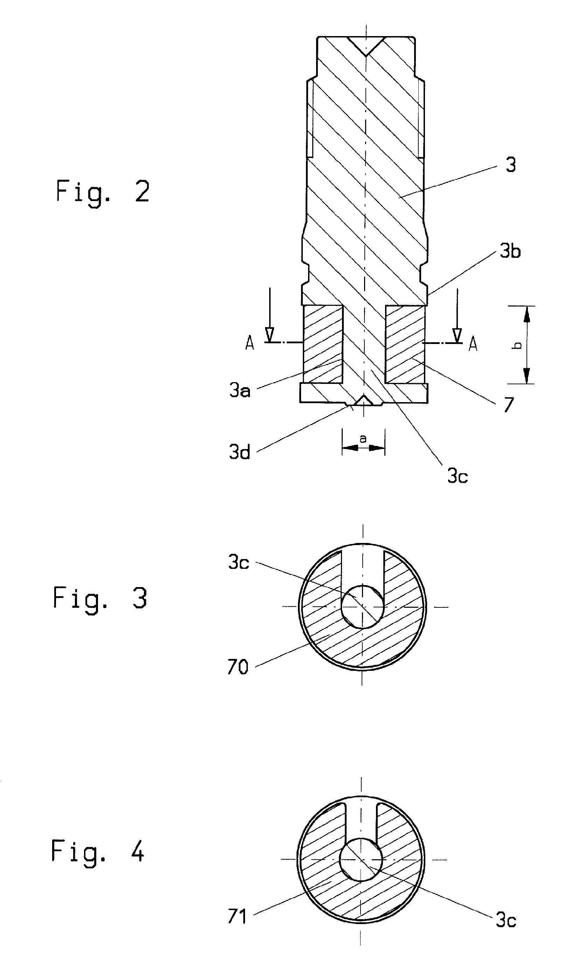

Wie aus den Figuren 2 bis 4 hervorgeht, handelt es sich bei der Aussparung 3a um eine ringförmige Umfangsnut in der Umfangswand 3b des Magnetkerns. Neben der Auswahl des Materials für den Permanentmagneten 7 kann dessen Stärke durch die axiale Länge b und den Durchmesser a des verbleibenden zapfenförmigen Teils 3c des Kerns 3 dimensioniert werden.

Die dem Anker zugewandte Stirnfläche des Magnetkerns 3 bildet eine Kernpolfläche 3d und der Permanentmagnet 7 ist mit axialem Abstand zu dieser Kernpolfläche 3d angeordnet, so dass der Anker mit Teilen des Magnetkerns 3 und nicht mit dem Permanentmagneten 7 in Kontakt kommen kann. Der Permanentmagnet ist somit in der Aussparung 3a vor Stoßbelastungen geschützt.

In einer Ausführungsform kann der Permanentmagnet 7 aus einem Kunststoff mit eingelagerten permanentmagnetischen Elementen bestehen. In diesem Fall würde es sich anbieten, dem Permanentmagneten durch ein Kunststoffspritzgussverfahren in die Aussparung 3a des Magnetkerns einzubringen.

Beim den Ausführungsbeispielen der Fig. 3 und 4 handelt es sich beim Permanentmagneten jeweils um eine einteilige, geschlitzte Ringscheibe 70, 71, die entweder als Kunststoffspritzteil (Fig. 3 und 4) oder als Sinterteil (Fig.3) angefertigt werden kann.

Beim Ausführungsbeispiel gemäß Figur 4 weist der Permanentmagnet einen Hinterschnitt auf, der sich beim Aufdrücken verformen kann und dadurch als Verliersicherung wirkt. Der Permanentmagnet besteht dabei insbesondere aus Kunststoffmaterial mit permanentmagnetischen Teilchen, um die erforderliche Elastizität zu gewährleisten.

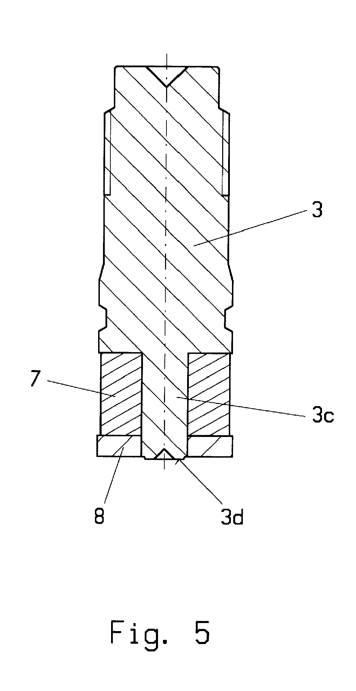

Neben den geschlitzten Ringscheiben gemäß Figuren 3 und 4 und der Herstellung des Permanentmagneten im Spritzgussverfahren direkt in die Aussparung 3a des Magnetkerns 3 kommt ferner die in Fig. 5 dargestellte Variante in Betracht, bei welcher der Permanentmagnet 7 als geschlossene Ringscheibe ausgebildet ist, die in der Mitte ein Loch aufweist, welches so bemessen ist, dass der Permanentmagnet auf den zapfenförmigen Teil 3c des Magnetkerns 3 aufgeschoben werden kann. Auch bei diesem Ausführungsbeispiel ist der Permanentmagnet 7 mit axialem Abstand zur Kernpolfläche 3d angeordnet. Die Kernpolfläche wird hier durch die vordere Stirnfläche des zapfenförmigen Teils 3c gebildet. Gewünschtenfalls kann auf den zapfenförmigen Teil 3c noch eine weitere Scheibe 8 aufgeschoben werden, die zur Sicherung des Permanentmagneten 7 dient.

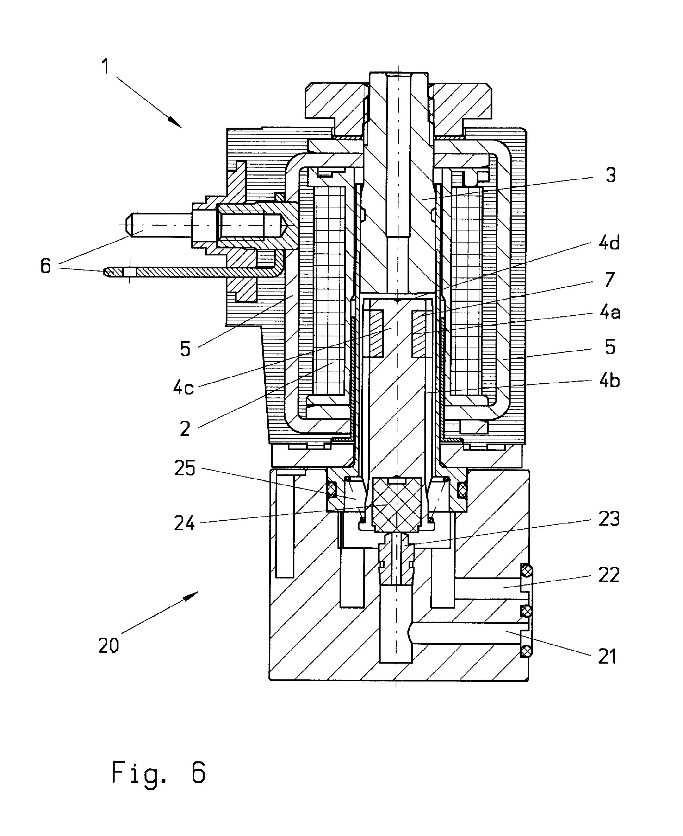

In Fig. 6 ist ein Magnetventil gemäß einem zweiten Ausführungsbeispiel gezeigt, wobei für gleiche Teile dieselben Bezugszeichen verwendet worden sind und insofern auf die vorhergehende Beschreibung verwiesen werden kann. Der Unterschied besteht lediglich in der Anordnung des Permanentmagneten 7, der bei diesem Ausführungsbeispiel in einer Aussparung 4a des Ankers vorgesehen ist. Bei der Aussparung 4a handelt es sich insbesondere wieder um eine ringförmige Umfangsnut in der Umfangswand 4b des Ankers 4.

Die dem Magnetkern 3 zugewandte Stirnfläche des Ankers bildet eine Ankerpolfläche 4d, wobei der Permanentmagnet 7 mit axialem Abstand zur Ankerpolfläche am Anker gehaltert ist. So ist auch bei dieser Ausführungsform gewährleistet, dass der Permanentmagnet vor Stoßbelastungen geschützt ist. Wiederum kann durch die axiale Länge der Aussparung 4a und den Durchmesser des zapfenförmigen Teils 4c des Ankers die Kraft des Permanentmagneten 7 dimensioniert werden.

Die Herstellung des Permanentmagnet 7 kann wiederum entsprechend den oben bereits beschriebenen Möglichkeiten erfolgen.

Bei allen Ausführungsbeispielen stehen sich in der Schließstellung Kernpolfläche und Ankerpolfläche unmittelbar gegenüber und ermöglichen so einen guten magnetischen Fluss. Es können somit auch Permanentmagneten mit kleinerer Dimensionierung bzw. schwächere Permanentmagneten, insbesondere aus Kunststoffmaterial mit permanentmagnetischen Teilchen, zum Einsatz kommen.

## Patentansprüche

1. Magnetventil mit einem Magnetkopf (1), der eine Spule (2), einen Magnetkern (3) und einen Anker (4) aufweist, sowie einem Ventilkörper (20) mit wenigstens einem Einlass (21), einem Auslass (22) und einem dazwischen angeordneten Ventilsitz (23), wobei eine mit dem Ventilsitz zusammenwirkende Dichtung (24) vorgesehen ist, die durch den Anker zwischen einer Schließstellung und einer Öffnungsstellung verschiebbar ist, wobei der Anker in der einen Stellung mittels eines Federelements (25) und in der anderen Stellung mittels eines Permanentmagneten (7) gehalten wird und die Verschiebung des Ankers (4) durch Bestromung der Spule (3) erfolgt,
**dadurch gekennzeichnet, dass** der Permanentmagnet (7) in einer Aussparung (3a, 4a) des Magnetkerns (3) oder Ankers (4) vorgesehen ist.

2. Magnetventil nach Anspruch 1, **dadurch gekennzeichnet, dass** es sich bei der Aussparung (3a/4a) um eine ringförmige Umfangsnut in der Umfangswand (3b/4b) des Magnetkerns (3)/Ankers (4) handelt.

3. Magnetventil nach Anspruch 1, **dadurch gekennzeichnet, dass** die dem Anker (4) zugewandte Stirnfläche des Magnetkerns (3) eine Kernpolfläche (3d) bildet und der Permanentmagnet (7) mit axialem Abstand zur Kernpolfläche am Magnetkern (3) gehaltert ist.

4. Magnetventil nach Anspruch 1, **dadurch gekennzeichnet, dass** die dem Magnetkern (3) zugewandte Stirnfläche des Ankers (4) eine Ankerpolfläche (4d) bildet und der Permanentmagnet (7) mit axialem Abstand zur Ankerpolfläche am Anker (4) gehaltert ist.

5. Magnetventil nach Anspruch 1, **dadurch gekennzeichnet, dass** der Permanentmagnet (7) in einer Aussparung (3a) des Magnetkerns (3) im Bereich des dem Anker (4) zugewandten Endes des Magnetkerns vorgesehen ist.

6. Magnetventil nach Anspruch 1, **dadurch gekennzeichnet, dass** der Permanentmagnet (7) in einer Aussparung (4a) des Ankers (4) im Bereich des dem Magnetkern (3) zugewandten Endes des Ankers vorgesehen ist.

7. Magnetventil nach Anspruch 1, **dadurch gekennzeichnet, dass** der Permanentmagnet (7) ringscheibenförmig ausgebildet ist.

8. Magnetventil nach Anspruch 1, **dadurch gekennzeichnet, dass** der Permanentmagnet (7) als ein- oder mehrteilige Ringscheibe (70; 71, 72) ausgebildet ist, die um einen zapfenförmigen Teil (3c, 4c) des Magnetkerns (3)/Ankers (4) angeordnet ist.

9. Magnetventil nach Anspruch 1, **dadurch gekennzeichnet, dass** der Permanentmagnet (7) durch ein Kunststoffspritzgussverfahren in die Aussparung (3a) des Magnetkerns (3) eingebracht ist.

10. Magnetventil nach Anspruch 1, **dadurch gekennzeichnet, dass** der Permanentmagnet (7) aus einem Kunststoff mit eingelagerten permanentmagnetischen Elementen besteht.
